# EUROPEAN PATENT APPLICATION

(11) **EP 4 436 107 A1**
(43) Date of publication of application: **25.09.2024**
(21) Application number: 23164163.0
(22) Date of filing: 24.03.2023
(51) Int. Cl.: H04L 9/40, G06F 21/55

(54) **INTRUSION RESPONSE SYSTEM WITH RULE BASE**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

The disclosed technology relates to a computer-implemented method of determining rules for an intrusion response system (IRS). The method comprises receiving a predictive model configured to analyse potential threat data and recommending mitigating actions to potential threats. The method applies a rule extraction algorithm to the predictive model to extract one or more rules from the predictive model and updates an IRS rule base of the IRS to include the one or more rules. Some examples of the method detect a potential threat that matches at least one of the one or more rules and perform a mitigating action defined by the at least one of the one or more rules, subsequent to updating the IRS rule base.

## Description

### BACKGROUND

An intrusion response system (IRS) is used to detect and assign an appropriate response to an intrusion in a communications network. An example of an intrusion in a communications network is an attempt(s) to access a user account without authorisation. Another example of an intrusion in a communications network is a distributed denial of service (DDoS) attack. IRSs use various techniques to respond to detected attacks. Many IRSs utilize a rule base for response selection, where the conditions for invoking a rule are met by an intrusion, and the rule has an associated response. A rule base is populated from rules generated by knowledge-driven approaches. There also exists data-driven approaches for IRSs, where high computing power and machine learning techniques are used to train a model to respond to an intrusion.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect of the disclosed technology relates to a computer-implemented method of determining rules for an intrusion response system (IRS). The method comprises receiving a predictive model configured to analyse potential threat data and recommending mitigating actions to potential threats. The method applies a rule extraction algorithm to the predictive model to extract one or more rules from the predictive model and updates an IRS rule base of the IRS to include the one or more rules. This gives an efficient and effective way to determine rules for an IRS.

Some examples of the disclosed technology comprise detecting a potential threat that matches at least one of the one or more rules and performing a mitigating action defined by the at least one of the one or more rules, subsequent to updating the IRS rule base. By detecting intrusions with the one or more rules in the updated IRS rule, intrusions are successfully mitigated.

In some examples of the disclosed technology, applying the rule extraction algorithm further comprises simplifying the one or more rules according to a simplification process in the rule extraction algorithm used. This makes the one or more rules that are extracted from data more comprehensible (to humans) and ensures all rules are kept in a similar format.

In some examples of the disclosed technology, applying the rule extraction algorithm further comprises pruning the one or more rules to remove redundant rules, and wherein pruning the one or more rules comprises verifying that each of the one or more rules does not contradict existing rules in the IRS rule base and deleting a rule if the rule is found to contradict an existing rule in the IRS rule base. By pruning redundant rules, the IRS rule base is kept organised by ensuring that contradictory rules are not stored that lead to conflicts when mitigating intrusions.

In some examples of the disclosed technology, applying the rule extraction algorithm further comprises using a rule verifier module to verify the quality of each of the one or more rules, and wherein verifying the quality of each of the one or more rules comprises checking that each of the one or more rules is appropriate for the specified input. Verifying the quality of the rules improves performance of an intrusion response system using the rules, as low-quality rules lead to poor intrusion response.

In some examples of the disclosed technology, applying the rule extraction algorithm further comprises using a rule verifier module to resolve conflicts between the rules, and wherein resolving conflicts between the rules comprises one of merging the rules or dropping outdated versions of the rules. Resolving conflicts between rules ensures that the rules are refined and do not conflict with each other. Conflicting rules may lead to crashing or error of an intrusion response system.

In some examples of the disclosed technology, the predictive model is trained by a machine learning algorithm. Receiving a predictive model that has already been trained results in no need for a training process, and the predictive model can already begin predicting responses to intrusions based on data.

In some examples of the disclosed technology, the predictive model comprises a plurality of sub-models and a different rule extraction algorithm is applied to each of the plurality of sub-models to extract one or more rules from each of the plurality of sub-models. By using different rule extraction algorithms on a plurality of sub-models, the computations performed per model are reduced, leading to improved computation, while still extracting many rules to enhance the IRS. Using sub models with different rule extraction systems is found to lead to greater diversity in the resulting rule base and in turn the diversity of rules improves performance of the IRS.

In some examples of the disclosed technology, applying the rule extraction algorithm to each of the plurality of sub-models further comprises using a rule aggregation module to aggregate the one or more rules extracted from each of the plurality of sub-models into a set of aggregated rules. Aggregating the rules extracted from each of the plurality of sub-models collects all the rules together which are then able to be processed through refinement such as quality checks and/or conflict resolution.

In some examples of the disclosed technology, using a rule aggregation module to aggregate the one or more rules extracted from each of the plurality of sub-models further comprises verifying the quality of the rules in the set of aggregated rules and resolving conflicts between the rules in the set of aggregated rules. When aggregating rules extracted from different rule extraction algorithms, more conflicts and quality issues are introduced, and so by refining the rules when aggregating, the set of aggregated rules is high quality; individual rules do not contradict each other, leading to improved intrusion response.

In some examples of the disclosed technology, the rule aggregation module checks each of the rules in the set of aggregated rules to generate a concrete rule, wherein a concrete rule is generated by combining at least two of the rules in the set of aggregated rules. Concrete rule generation improves the strength of rules, and therefore the IRS is more robust.

In some examples of the disclosed technology, the rule aggregation module checks each of the rules in the set of aggregated rules to see if the rules can be segregated into independent subsets, and when the rules can be segregated, segregating the rules into independent subsets. By segregating rules into independent subsets, rules are divided up, which enables different groups of rules to be used in parallel, thereby giving efficiency.

In some examples of the disclosed technology, a set of new rules is generated from the set of aggregated rules by the rule aggregation module, by considering permutations of a rule feature and a rule output and combining the rules differently as a result of the permutations, and the set of new rules is combined with the set of aggregated rules to enlarge the set of aggregated rules. Generating a set of new rules leads to a larger set, which is used to increase the number of rules in the IRS rule base, creating a stronger IRS with more rules and more mitigation.

In some examples of the disclosed technology, the set of aggregated rules is added to the IRS rule base so that the IRS rule base is updated to include the set of aggregated rules. The set of aggregated rules is extracted from many predictive models, and contains a refinement process, and so storing the set of aggregated rules causes the IRS rule base to contain high-quality rules with appropriate responses to many types of intrusion.

Another aspect of the disclosed technology comprises an apparatus comprising at least one processor, and a memory storing instructions that, when executed by the at least one processor, perform a method for determining rules for an intrusion response system, IRS. The method comprises receiving a predictive model configured to analyse potential threat data and recommend mitigating actions to potential threats. The method applies a rule extraction algorithm to the predictive model to extract one or more rules from the predictive model and updating an IRS rule base of the IRS to include the one or more rules.

The claimed features leverage the benefits of both data-driven approaches and knowledge-driven approaches, by using a data-driven approach to populate an IRS rule base of an IRS. The outputs of both approaches can be complementary to each other, and so there is reason to make use of both approaches in an IRS.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 is a schematic diagram of a communications network, comprising an intrusion response system (IRS) and an intrusion detection system (IDS).
FIG. 2A and FIG. 2B show example methods of generating rules.
FIG. 3 is a flow diagram of an example method performed to extract one or more rules and update an IRS rule base to include the one or more rules.
FIG. 4 is a schematic diagram showing in more detail an example of a rule extraction algorithm.
FIG. 5A and FIG. 5B are schematic diagrams of apparatus used by the IRS rule base expander.
FIG. 6 is a flow diagram of extracting one or more rules from a predictive model using a rule extractor module.
FIG. 7 is a flow diagram of a method of verifying rules using a rule verifier module.
FIG. 8 is a flow diagram of a method of aggregating rules using a rule aggregation module.
FIG. 9 shows an exemplary computing device in which examples of an IRS rule base expander and/or an IRS is implemented.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

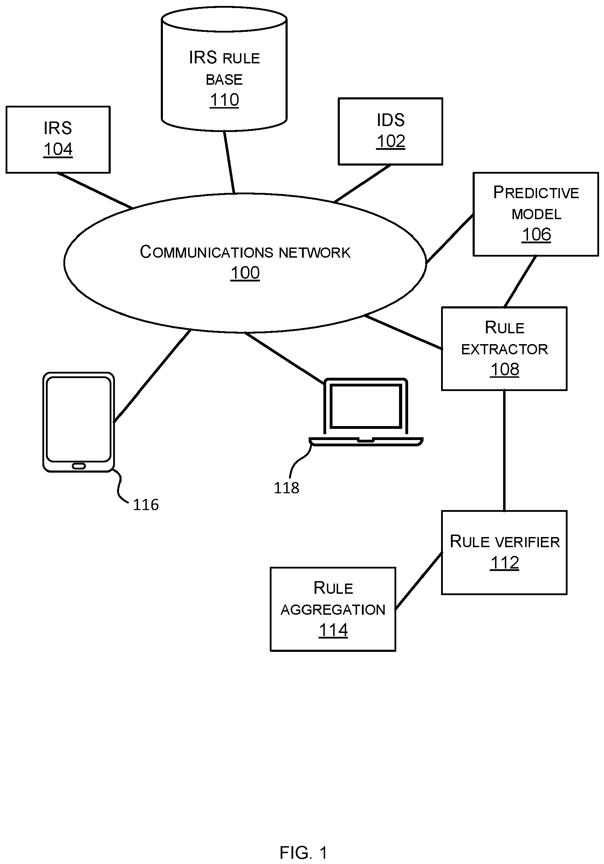

FIG. 1 of the accompanying drawings shows a schematic diagram of a communications network 100, in which an intrusion response system (IRS) 104 and/or intrusion detection system (IDS) 102 is used. Communications network 100 is any network in which a group of nodes are used to transmit messages, information, etc. Devices such as mobile phones 116 and computers 118 (e.g., desktop computers, personal laptops) are used to access the communications network 100. Sometimes, the devices are used to maliciously attempt to access the communications network 100 (e.g., a user uses a mobile phone 116 to attempt to access the communications network 100 without authorisation). Therefore, there is need to detect intrusions into a communications network, to prevent leaks of personal or confidential data, and/or prevent unauthorised access to secure computing resources. A communications network 100 uses an IDS 102 to detect the intrusions. IRS 104 is used to mitigate the intrusions detected by IDS 102. The IDS 102 is any commercially available IDS or other well-known IDS functionality. An IDS comprises a device or software application that monitors a communications network for threats and/or malicious activity. In some IDSs, detected threats and/or malicious activity is reported to an administrator or collected by a security information system. IDSs range in application from single computers to entire networks. IDSs use signature-based detection, where data (e.g., network traffic) is analysed and the signatures in the data produced by threats (e.g., malware) are detected by the IDS. Other IDSs use anomaly-based detection. In anomaly-based detection, machine learning models learn "good" network traffic, and deviations from the good traffic are deemed as anomalies and are studied to determine if the anomaly is malicious activity, or previously unknown legitimate activity. Other IDSs use other types of detection, such as reputation-based detection or stateful protocol analysis detection.

The inventors recognize approaches to IRS 104 technology using one of two separate approaches, a knowledge-driven approach (KDA) or data-driven approach (DDA), both of which are described herein. Both approaches result in generated responses to intrusions, such as blocking an account or rerouting network traffic to a sink. The data-driven approach uses high computing power and/or machine learning models to analyse data, training and converging towards specific actions for similar attack data, leading to generation of a response. The knowledge-driven approaches generate rules based on wisdom from historical experiences. IRS 104 is implemented using any well-known IRS technology. An IRS comprises a device or software application that monitors a communication network for threats and/or malicious activity and recommends and/or implements mitigating actions to the threats and/or malicious activity. IRSs range in application from single computers to entire networks. The mitigating actions comprise reporting or blocking the threats and/or malicious activity. In some examples, a device connected to the communications network has malware, and a mitigating action taken by the IRS is to airgap the device. In various examples, the mitigating actions taken by the IRS are according to rules stored in an IRS rule base 110. Similarly, to an IDS, the IRS detects threats and/or malicious activity using detections including signature-based, anomaly-based, reputation-based detection, but also includes the selection and implementation of mitigating actions.

The inventors have recognized these two approaches, DDA and KDA, are independent, but the methods described herein are for an improved IRS, that leverages the outputs of both DDAs and KDAs in a complementary fashion. While machine learning models and deep learning models attain high predictive accuracy, the incomprehensibility (to human users) of their predictions limit application. The methods described herein improve the predictive accuracy and comprehensibility of IRSs by using the high predictive accuracy of machine learning models and deep learning models and transferring this data to an IRS rule base 110.

An IRS rule base 110 is a store of rules and responses that can be used by an IRS. Responses are extracted by using a DDA but converted to rules and implemented and stored in an IRS rule base 110, and so the method converts a DDA to a KDA. In various examples, the IRS rule base is a database. The method comprises receiving a predictive model 106, configured to analyse potential threat data and recommend mitigating actions to potential threats. The threat data is data detailing threats or intrusions in the communications network 100. A rule extraction algorithm is applied to the predictive model to extract one or more rules. In various examples, the rule extraction algorithm is stored in a rule extractor 108 module. In various examples, a rule verifier 112 module is included, configured to verify the quality of the rules extracted, and/or resolve conflicts between extracted rules. In various examples, a plurality of sub-models is used, each with their own rule extractor module and rule extraction algorithm. In various examples, a rule aggregation 114 module is included, configured to aggregate the one or more rules extracted from the plurality of sub-models. In various examples, the rule aggregation 114 module is configured to verify the quality of a set of aggregated rules, and/or resolve conflicts between the rules in the set of aggregated rules.

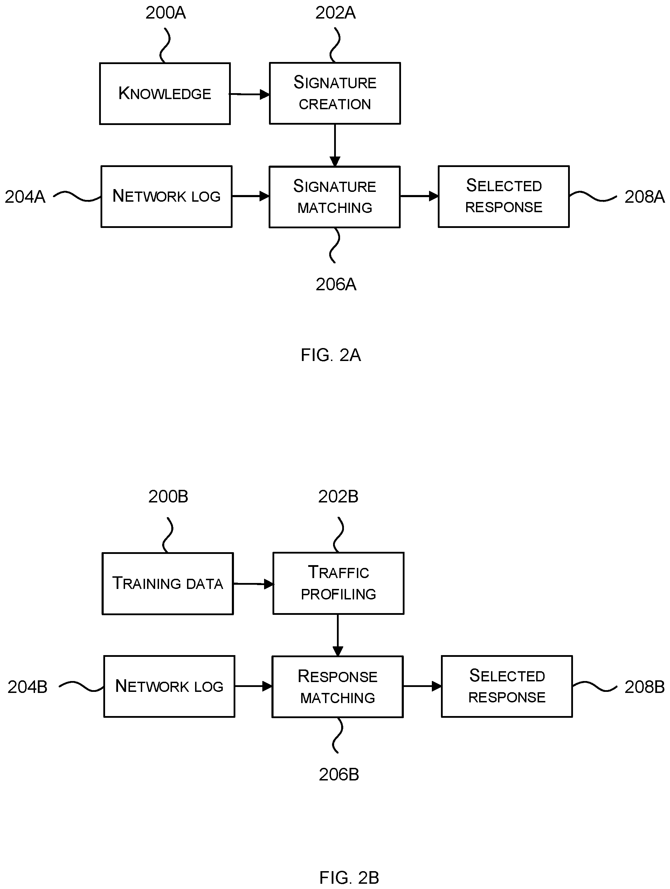

FIG. 2A shows a knowledge-driven approach (KDA) for creating an IRS. KDAs provide collective wisdom from historical experiences. Knowledge is received in the form of rules 200A. A signature is created for the rule 202A, defining how the rule can be detected (e.g., how a DDoS attack is detected). Network logs are received 204A, which are then analysed. During analysis, if the signatures found in the network logs are found to match the signatures 206A created, an intrusion is detected, and a response is selected based on the type of intrusion 208A (e.g., forwarding traffic to a sink). The learnings of how an intrusion was responded to can be formalised into a rule, which can then be implemented in a system. In general, the steps of using and applying a KDA are interchangeable and can be merged, depending on complexity of the problem and availability of data. In a KDA, an issue is defined, background information is gathered (e.g., in the form of network logs), the knowledge is conceptualised (e.g., filter logs for relevant information), integrate the knowledge (e.g., review network logs for an intrusion to look for patterns), formalise the knowledge into a rule, verify that the rule is sensible and implement the rule.

KDAs have numerous advantages in decision making. The decisions are based on knowledge, and so they concentrate on decisions that need to be dealt with. The methods are non-algorithmic, and so partial or uncertain knowledge will suffice for making decisions. KDAs are established on information of varying quality, and so perform better when regularly updated and learn from mistakes.

FIG. 2B shows a data-driven approach (DDA) for creating an IRS. Training data is received 200B (e.g., network logs) which can then be profiled 202B (e.g., a model is created to predict the response from network logs). Then, other network logs are received and analysed 204B by the model once the model is trained. Response matching 206B is when the model matches a response from the training data to a response found in the other network logs received, which is followed by selecting a response 208B and using this to develop a rule. DDAs are concerned with training a model on network logs or wider network information to predict responses, using historical response data.

Both approaches are independent, but the present embodiments describe methods to leverage both the DDA and KDA, by combining these approaches. Firstly, the advantages of the embodiments described herein are that it makes the output of the data-driven approach more human-readable by translating the DDA output into logical rules and storing in the IRS rule base. This means that analysts can understand the key outputs from machine learning models, making them comprehensible. Secondly, it prevents excessive computing by repeatedly interacting with the data driven models when the intrusion is just compared with a simple rule. Thirdly, it can extract hidden rules discovered by the data-driven models that go unnoticed. Finally, the methodology can be used to refine existing rules, keeping the rule base dynamic and up to date, which results in better overall security against intrusions.

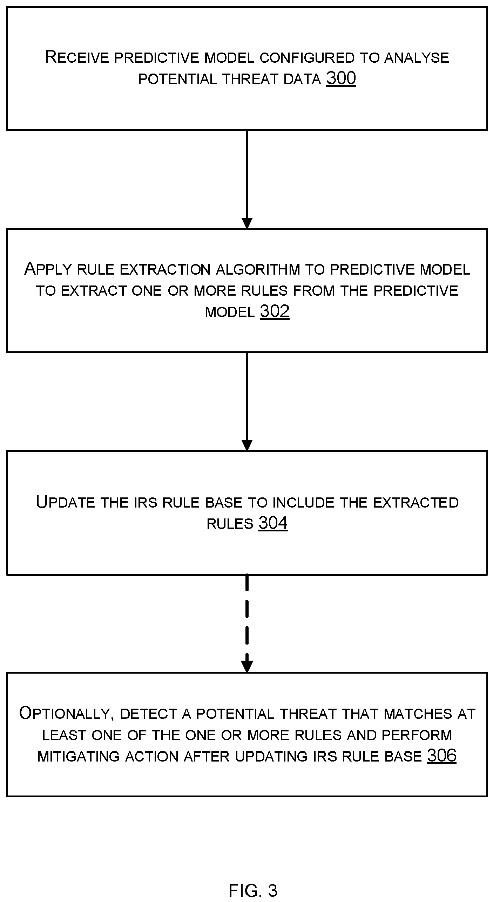

FIG. 3 is a flow diagram of a method for determining rules for an IRS. A predictive model is received 300, that is configured to analyse potential threat data and recommend mitigating actions to potential threats (e.g., a DDoS attack is found by analysing potential threat data, and so the predictive model recommends sending all traffic to a sink). The predictive model is a data-driven predictive model, in that the predictive model analyses data and predicts rules based on a DDA. The predictive model 300 is received from another computing entity or by input from an operator.

In various examples, the predictive model is trained by a machine learning algorithm. This may be done prior to a computer receiving the predictive model. In various examples, the predictive model is a supervised learning model. In various examples, the predictive model is an unsupervised learning model. In various examples, the predictive model is a reinforcement learning model. In various examples, the predictive model uses labelled data.

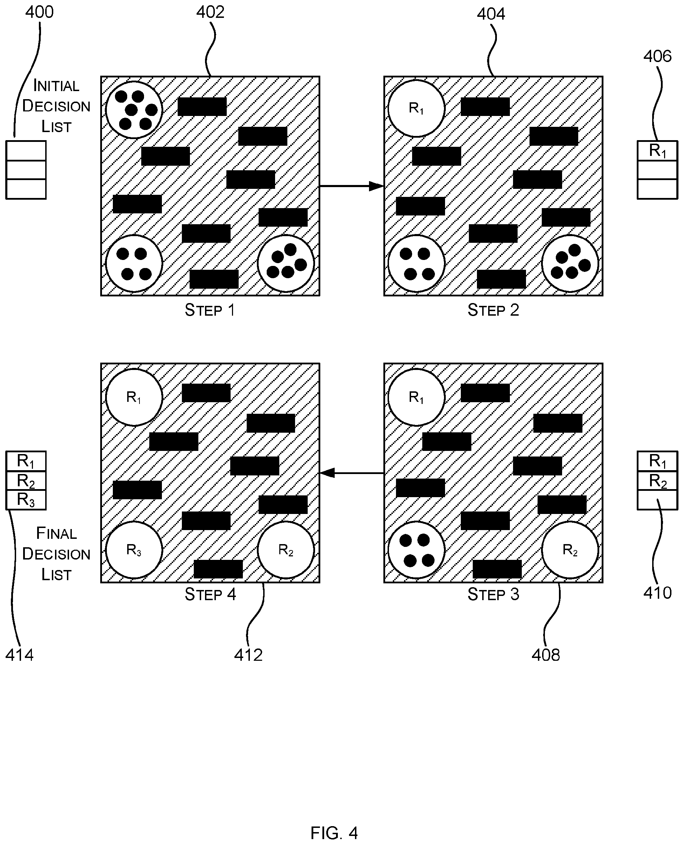

A rule extraction algorithm is applied to the predictive model to extract one or more rules from the predictive model 302. Rule extraction algorithms are used for both interpreting machine learning models and for mining the relationships between input and output variables in data. The primary aim of rule extraction is to automatically acquire knowledge, study the patterns and behaviour of predictive models. Rule extraction methods present a comprehensive description of the underlying predictive model. They also approximate the model as accurately as possible. There are numerous well-known rule extraction algorithms, such as Particle Swarm Optimization (PSO), decision treebased algorithms (e.g., C4.5, RIPPER, etc), sequential covering algorithms, and so on. An example of operation for a rule extraction algorithm is described herein with reference to FIG. 4 below. In various examples, the rule extraction algorithm is stored within a rule extractor module. In various examples, the rule extractor module applies the rule extraction algorithm to the predictive model.

The IRS rule base of the IRS is updated to include the one or more rules 304. The one or more rules are the rules extracted by the rule extraction algorithm from the predictive model. This comprises storing the one or more rules in the IRS rule base. In various examples, the one or more rules are stored in the IRS rule base as database entries. In various examples, the rule extractor module stores the one or more rules in the IRS rule base.

In various examples, once the one or more rules are extracted from the predictive model after applying the rule extraction algorithm, and stored in the IRS rule base, the IRS is deployed with an updated set of rules. In various examples, subsequent to updating the IRS rule base, a potential threat is detected 306 that matches at least one of the one or more rules, and a mitigating action is performed defined by the at least one of the one or more rules. In an example, a potential threat is detected by monitoring login attempts at a service provided by a telecommunications network. Where a condition of a rule is triggered by observing more than a specified number of unsuccessful login attempts an action of the rule is executed, such as to shut down the account.

FIG. 4 shows an example operation of a rule extraction algorithm. In particular, the figure shows a sequential covering rule extraction algorithm. In the figure, it is assumed that there is a predictive model that can receive network logs and predict an appropriate response to take. Initial decision list 400 is received as an input to the method from another computing process. Initial decision list 400 is empty of rules, decisions, responses, etc. Box 402 is a space which represents information from the received network logs. The dots and rectangles in the boxes represent possible responses, i.e., the dots represent a different response to the rectangles. In this rule extraction algorithm, similar responses are grouped where possible. In box 402, the circles containing dots in the corners of the network log space are examples of grouping.

In box 404 which represents a next step in the process of rule extraction, one of the grouped responses (e.g., remove a device in response to detection of malware) has now been extracted into a rule *R*₁ and the rule *R*₁ is stored in a decision list 406. This is then repeated for similar cases, as shown in the next step.

In box 408, another grouping of similar responses has resulted in a rule extraction, creating rule *R*₂, and so the space has now extracted more than one rule. Similarly, to the previous case, the rule *R*₂ has been stored sequentially in the decision list 410.

The steps are repeated, as in box 412, another rule *R*₃ has been extracted from a grouping of similar responses, and so now the rule extraction algorithm has extracted 3 rules. In 414, the rule *R*₃ has been stored in the decision list.

FIG. 4 shows how a rule extraction algorithm can analyse data (such as network traffic logs) and produce a list of rules, that can then go on to be stored in, i.e., an IRS rule base.

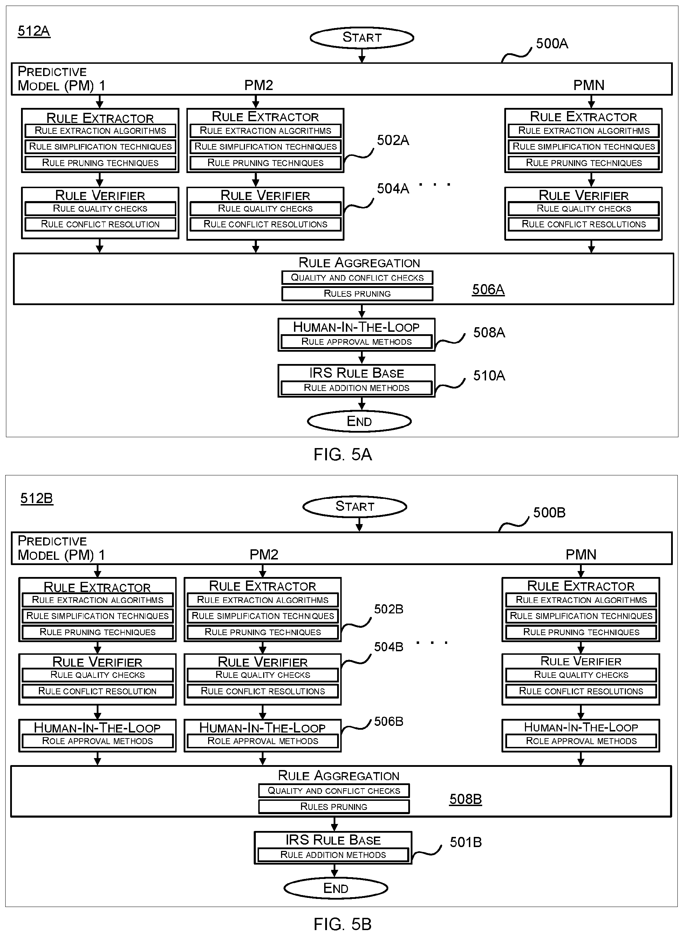

FIG. 5A shows an example of the IRS rule base expander 512A. In various examples, the IRS rule base expander 512A is separated into modules, wherein the rule extraction algorithm is stored as part of a rule extractor module. In various examples, other modules are used to refine the rules extracted by the rule extraction algorithm. First, a predictive model is received (from user input or from another computing entity or from memory) that is configured to analyse potential threat data and recommend mitigating actions to potential threats. In various examples, including the example shown in FIG. 5A, the predictive model comprises a plurality of sub-models and a different rule extraction algorithm is applied to each of the plurality of sub-models to extract one or more rules from each of the plurality of sub-models.

In various examples, the predictive models are trained by a machine learning algorithm. This may be done prior to a computer receiving the predictive models and extracting rules from the predictive models. In various examples, the predictive models are supervised learning models. In various examples, the predictive models are unsupervised learning models. In various examples, the predictive models are reinforcement learning models. In various examples, the predictive models use labelled data. In various examples, one of the predictive models is a supervised learning model, while another predictive model is an unsupervised learning model, and so on.

The predictive model, wherein the predictive model comprises a plurality of sub-models and a different rule extraction algorithm is applied to each of the plurality of sub-models to extract one or more rules from each of the plurality of sub-models, is received 500A. The first predictive model can be labelled PM1, the second PM2, and so on, with the final predictive model being denoted by PMN, as shown in FIG. 5A.

The rule extractor module 502A is shown in FIG. 5A. In various examples, each predictive model has its own associated rule extractor module, each rule extractor module contains its own rule extraction algorithm. In various examples, the rule extractor modules contain the same rule extraction algorithm. In various examples, the rule extractor modules contain different rule extraction algorithms. In various examples, some of the N rule extractor modules contain the same rule extraction algorithm, while other rule extractor modules contain a different rule extraction algorithm.

In various examples, in the rule extractor module, other actions are performed on the one or more rules that have been extracted. In various examples, applying the rule extraction algorithm further comprises simplifying the one or more rules according to a simplification process in the rule extraction algorithm used. In various examples, including the example shown in FIG. 5A, the simplification process is referred to as rule simplification techniques. In various examples, rule simplification process refers to presenting rules in a uniform manner with similar conjunctions and format. In various examples, the use of parentheses, operators and rule feature names are represented in the same way in all generated rules (e.g., ^ is used in various examples of rules, rather than &) and representations cannot be used interchangeably. In various examples, the rule extraction algorithm performs rule simplification techniques in a different manner. In various examples, rule simplification process refers to removing repeated conditions in one of the one or more rules that have been extracted by the rule extraction algorithm. In various examples, an extracted rule is, written in text for comprehensibility, "*if the email contains a suspicious URL, the email is external and the email contains a suspicious URL then block the email*" then the rule simplification process removes one of the conditions for the email containing a suspicious URL, as it is repeated. In various examples, rule simplification techniques comprise filtering out similar conditions in at least one of the one or more rules that have been extracted by the rule extraction algorithm. In various examples, filtering out similar conditions comprises disregarding at least one of the similar conditions. In various examples, an extracted rule, written in text for comprehensibility, "*if the suspicious URL score is at least 0.8, and the suspicious URL is at least 0.9 then block the URL*" then the rule simplification technique simplifies this rule by filtering out one of the similar conditions, and in this example, the condition requiring a score of at least 0.9 is filtered out as it is less strict, assuming that 1 is the maximum score and a value of 1 is deemed the most suspicious.

In various examples, another action that is performed in the rule extractor module is rule pruning techniques. In various examples, applying the rule extraction algorithm further comprises pruning the one or more rules to remove redundant rules. In various examples, pruning the one or more rules comprises verifying that each of the one or more rules does not contradict existing rules in the IRS rule base and deleting a rule if the rule is found to contradict an existing rule in the IRS rule base. Rule pruning techniques, such as I-Prune, PCBA based pruning, long rules pruning, compact rule set, Laplace accuracy, and so on, are used.

FIG. 5A also shows a further module, the rule verifier 504A. In various examples, one action that the rule verifier performs is rule quality checks. In various examples, applying the rule extraction algorithm further comprises using a rule verifier module to verify the quality of each of the one or more rules. In various examples, verifying the quality of each of the one or more rules comprises checking that each of the one or more rules is appropriate for the specified input. When the one or more rules are checked and they are appropriate for the specified input, they pass a quality check. When the one or more rules are checked and they are not appropriate for the specified input, they do not pass a quality check. In various examples, one of the extracted rules is, written in text for comprehensibility, "*if malware is detected on a device, then reroute the traffic to a sink*" which would not pass a quality check because the rule is not appropriate for the specified input, as rerouting traffic to a sink is not a suitable response for malware detection. If malware is detected on a device, the appropriate response would be to airgap the device (i.e disconnect the device or isolate the device from the communications network). Similarly, in various examples, one of the extracted rules is, written in text rather than rule features, "*if the number of failed authentications is greater than 5, then block the user account*" which passes a quality check because the rule is appropriate for the specified input, as it is appropriate to block access to a user account for a number of failed authentications, as it likely means someone is trying to access an account without permission or knows some details about the login information.

In various examples, the rule verifier is also used to perform rule conflict checks. In various examples, applying the rule extraction algorithm further comprises using a rule verifier module to resolve conflicts between the rules. In various examples, resolving conflicts between the rules comprises merging the rules. In various examples, resolving conflicts between the rules comprises dropping outdated versions of the rules. In various examples, conflict resolution algorithms are used to resolve the conflicts between the one or more rules. In various examples, the size ordering conflict resolution algorithm is used, which replaces the one or more rules based on a rule needing more qualifying criteria to be met. In various examples, two of the extracted rules could imply "*if there are 3 failed authentications, block the account*"*,* and "*if there are 5 failed authentications, block the account*"*.* Using the size ordering conflict resolution algorithm, the former of the two extracted rules would be replaced, because the latter rule needs more qualifying criteria to be met, wherein the criteria (in this example) is number of failed authentications. In various examples, a reverse size ordering conflict resolution algorithm is used, which replaces the one or more rules based on a rule needing fewer qualifying criteria to be met. Using the same two extracted rules as in the previous example, the rule requiring 5 failed authentications is kept, as it is broader, when using the reverse size ordering conflict resolution algorithm.

In various examples, the rule aggregation module 506A is included, as shown in FIG. 5A. In various examples, applying the rule extraction algorithm to each of the plurality of sub-models further comprises using a rule aggregation module to aggregate the one or more rules extracted from each of the plurality of sub-models into a set of aggregated rules. In various examples, four algorithms are used and extract the following rules from their respective sub-models:

### ALGORITHM 1

```
      (AttackSeverity=3)^(HostImportance=3)^(HostAccessibility=X) > RunScript
                (Host importance=1)"(AttackImpact=CI) > Shutdown
         (AttackSeverity=1)^(HostImportance=1)^(AttackImpact=A) > Monitor
            (AttackSeverity=5)^(HostAccessibility=R) > UpdateEncyption
       (AttackSeverity=5)^(HostImportance=1)^(AttackImpact=I) > SendEmail
```

### ALGORITHM 2

```
      (AttackSeverity=3)^(HostImportance=3)^(HostAccessibility=X) > RunScript
                (HostImportance=1)^(AttackImpact=CI) > Shutdown
         (AttackSeverity=1)^(HostImportance=1)^(AttackImpact=A) > Monitor
           (HostImportance=5)^(HostAccessibility=R) > UpdateEncryption
      (AttackSeverity=3)^(HostImportance=3)^(HostAccessibility=X) > RunScript
```

### ALGORITHM 3

```
  (AttackSeverity=3)^(HostImportance=2)^(HostAccessibility=R) > UpdateEncryption
     (AttackSeverity=3)^(HostImportance=3)^(HostAccessibility=W) > BlockPort
      (AttackSeverity=3)^(HostImportance=2)^(HostAccessibility=X) > RunScript
                  (AttackSeverity=5)^(AttackImpact=I) > SendEmail
```

### ALGORITHM 4

```
      (AttackSeverity=3)^(HostImportance=2)^(HostAccessibility=X) > RunScript
                  (AttackSeverity=5)^(AttackImpact=I) > SendEmail
           (HostImportance=5)^(HostAccessibility=R) > UpdateEncryption
      (AttackSeverity=3)^(HostImportance=3)^(HostAccessibility=X) > RunScript
                 (AttackSeverity=5)^(AttackImpact=CI) > BlockPort
```

In the example above, 19 rules have been extracted, but this could be any number, depending on the amount of data accessible by the rule extraction algorithms. The terms in parentheses are known as rule features (e.g., AttackSeverity, HostAccessibility) and the terms on the right-hand side are possible outputs, such as RunScript, Shutdown, etc. Rule features define one of the conditions in a rule, and a rule is comprised of at least one rule feature. The rule features are equal to certain values, shown in the below key:

```
                           AttackSeverity = 1-5 (low to high)
                           Hostimportance = 1-5 (low to high)
                HostAccessibility = R, W, X (read, write, execute access)
       Attacklmpact = CIA, Cl, CA, IA, C, I, A (confidentiality, integrity, availability)
```

These are possible values for some rule features, and while only a few rule features are described here, this is highly extensible. Rule features are defined to cover any condition that is used to inform a response to an attack. In the example above, the rule features define conditions concerning the severity of the attack, the importance of the host, the host's accessibility rights and the impact of the attack. In various examples, rule features define conditions concerning at least one of: time of day, owner of a device and/or service and/or application, device privileges, business criticality, location, number of users that have access, and so on. The values that the rule features are allowed to take is also extensible if required. In words, the first rule extracted by algorithm 1 states that if AttackSeverity is equal to 3 and Hostlmportance is equal to 3 and HostAccessibility is Execute access, then run the script. The rule aggregation aggregates the one or more rules extracted from the plurality of sub-models. In various examples, using a rule aggregation module comprises aggregating the one or more rules extracted from each of the plurality of sub-models into a set of aggregated rules. In various examples, using a rule aggregation module to aggregate the one or more rules extracted from each of the plurality of sub-models further comprises verifying the quality of the rules in the set of aggregated rules and resolving conflicts between the rules in the set of aggregated rules. In various examples, verifying the quality of the rules in the set of aggregated rules comprises using the rule aggregation module to verify the quality of the rules in the set of aggregated rules. In various examples, verifying the quality of the rules in the set of aggregated rules comprises checking that the rules in the set of aggregated rules are appropriate for the specified input. In various examples, resolving conflicts between the rules in the set of aggregated rules comprises using the rule aggregation module to resolve conflicts between the rules in the set of aggregated rules. In various examples, resolving conflicts between the rules in the set of aggregated rules comprises merging the rules in the set of aggregated rules. In various examples, resolving conflicts between the rules in the set of aggregated rules comprises dropping outdated versions of the rules in the set of aggregated rules. For the rules shown previously, after aggregation, quality and conflict resolution, the following set of aggregated rules is obtained:

```
      (AttackSeverity=3)^(HostImportance=3)^(HostAccessibility=X) > RunScript
                (HostImportance=1)^(AttackImpact=CI) > Shutdown
         (AttackSeverity=1)^(HostImportance=1)^(AttackImpact=A) > Monitor
            (AttackSeverity=5)^(HostAccessibility=R) > Update Encryption
       (AttackSeverity=5)^(HostImportance=1)^(AttackImpact=I) > SendEmail
  (AttackSeverity=1)^(HostImportance=5)^(HostAccessibility=R) > UpdateEncryption
     (AttackSeverity=3)^(HostImportance=3)^(HostAccessibility=W) > BlockPort
      (AttackSeverity=3)^(HostImportance=2)^(HostAccessibility=X) > RunScript
                  (AttackSeverity=5)^(AttackImpact=I) > SendEmail
           (HostImportance=5)^(HostAccessibility=R) > UpdateEncryption
                 (AttackSeverity=5)^(AttackImpact=CI) > BlockPort
```

The rules have been condensed from 19 rules to 11 rules to generate the set of aggregated rules. In various examples, the rule aggregation module performs further actions on the set of the aggregated rules. In various examples, the rule aggregation module checks each of the rules in the set of aggregated rules to generate a concrete rule. In various examples, a concrete rule is generated by combining at least two of the rules in the set of aggregated rules. Below is a concrete rule, generated by combining rule 7 and rule 11 from the set of aggregated rules. They are combined in such a way because they both have the output of BlockPort. In various examples, a different output is selected, which would generate a different concrete rule.

```
 (AttackSeverity=3)^(HostImportance=3)^(HostAccessibility=W)^(AttackImpact=CI) >
                                     BlockPort
```

In various examples, the rule aggregation module performs further actions on the set of aggregated rules. In various examples, each of the rules in the set of aggregated rules are checked to see if the rules can be segregated into independent subsets. In various examples, when the rules can be segregated, the rule aggregation segregates the rules into independent subsets.

Independent subsets refer to a set of rule feature combinations for a new rule that are derivable from existing rules. Thus, new rules are also valid rules. In various examples, one rule is divided into smaller new rules, and thus, segregated into independent subsets. A generated segregated rule is shown below.

```
            (AttackSeverity=1)^(HostImportance=5) > UpdateEncryption
```

As rules 4, 6 and 10 from the set of aggregated rules all have an output of UpdateEncryption, the rule features could be permuted in such a way as to produce the above rule. Therefore, the rule is segregated into an independent subset.

In various examples, the rule aggregation module performs further actions on the set of aggregated rules. In various examples, a set of new rules is generated from the set of aggregated rules, by considering permutations of a rule feature and a rule output and combining the rules differently as a result of the permutations, and the set of new rules is combined with the set of aggregated rules to enlarge the set of aggregated rules. In various examples, the rule aggregation module generates the set of new rules.

```
       (AttackSeverity=5)^(HostImportance=3)^(AttackImpact=CI) > BlockPort
      (AttackSeverity=5)^(HostAccessibility=W)^(AttackImpact=CI) > BlockPort
       (AttackSeverity=3)^(HostImportance=3)^(AttackImpact=CI) > BlockPort
  (AttackSeverity=5)^(HostImportance=5)^(HostAccessibility=R) > UpdateEncryption
```

In total, there are now 17 rules, despite starting from 11. In various examples, all of these rules are stored in the IRS rule base. In various examples, more rules are generated and included in the set of new rules. In various examples, less rules are generated and included in the set of new rules.

In the embodiment of FIG. 5A, a human-in-the-loop module 508A is used to approve rules for addition to the IRS rule base. In various examples, the human-in-the-loop module corresponds to waiting for an input. In various examples, including the example shown in FIG. 5A, the human-in-the-loop is combined and performs its operation across all models. In various examples, the human-in-the-loop is responsible for authorising the addition of verified rules to the IRS rule base. In various examples, the human-in-the-loop is automated such that it verifies rules and adds them to the IRS rule base automatically. In various examples, in exceptional circumstances, the human-in-the-loop is used by an expert (e.g., when a new rule is identified for critical infrastructure).

Once the rules have been approved, they are added to the IRS rule base 510A. In various examples, the IRS rule base of the IRS is updated to include the one or more rules. In various examples, such as the example shown in FIG. 5A, the rule aggregation module is included in the IRS rule base expander 512A. In various examples, such as the example shown in FIG. 5A, the set of aggregated rules is added to the IRS rule base so that the IRS rule base is updated to include the set of aggregated rules. This is performed with rule addition methods, wherein rule addition methods comprise storing the set of aggregated rules in the IRS rule base.

FIG. 5B shows another example embodiment of the IRS rule base expander 512B. Similarly, to FIG. 5A, it shows the IRS rule base expander 512B including the same modules described previously. In various examples, including the example shown in FIG. 5B, the predictive model comprises a plurality of sub-models and a different rule extraction algorithm is applied to each of the plurality of sub-models to extract one or more rules from each of the plurality of sub-models.

The rule extractor module 502B is shown in FIG. 5B. In various examples, each predictive model has its own associated rule extractor module, each rule extractor module contains its own rule extraction algorithm. The rule verifier module 504B is shown in FIG. 5B. In various examples, applying the rule extraction algorithm further comprises using a rule verifier module to verify the quality of each of the one or more rules. In various examples, applying the rule extraction algorithm further comprises using a rule verifier module to verify the quality of each of the one or more rules, and wherein verifying the quality of each of the one or more rules comprises checking that each of the one or more rules is appropriate for the specified input. In various examples, the rule verifier also is used to perform rule conflict checks.

The human-in-the-loop 506B is shown. In various examples, the human-in-the-loop corresponds to waiting for an input. In various examples, including the example shown in FIG. 5B, each model has its own human-in-the-loop and the input is received on a model-by-model basis. In various examples, the human-in-the-loop is responsible for authorising the addition of verified rules to the IRS rule base. In various examples, the human-in-the-loop is automated such that the human-in-the-loop verifies rules and adds them to the IRS rule base automatically. In various examples, in exceptional circumstances, the human-in-the-loop is used by an expert (e.g., when a new rule is identified for critical infrastructure).

In various examples, the rule aggregation module 508B is included, as shown in FIG. 5B. In various examples, applying the rule extraction algorithm to each of the plurality of sub-models further comprises using a rule aggregation module to aggregate the one or more rules extracted from each of the plurality of sub-models into a set of aggregated rules.

Once the rules have been approved 510B, they are added to the IRS rule base. In various examples, the IRS rule base of the IRS is updated to include the one or more rules. In various examples, such as the example shown in FIG. 5A, the rule aggregation module is included in the IRS rule base expander 512B. In various examples, such as the example shown in FIG. 5A, the set of aggregated rules is added to the IRS rule base so that the IRS rule base is updated to include the set of aggregated rules. In various examples, this is performed with rule addition methods.

The distinction between the examples shown in FIG. 5A and FIG. 5B is the placement of the human-in-the-loop. In FIG. 5A, the rules have been aggregated across all models and the aggregated rules are presented to the human-in-the-loop for approval. This means the human-in-the-loop is only checking aggregated rules, of which there should be far fewer. In FIG. 5B, the human-in-the-loop is used on a model-by-model basis, and so once the rules for one model are verified in the rule verifier module, they can be presented to the human-in-the-loop for approval. This means the rule aggregation in the next step of FIG. 5B is only working with approved rules, and not aggregating rules that would be disregarded later. In various examples, the human-in-the-loop module is featured both after the rule verifier module and after the rule aggregation module. In various examples, the human-in-the-loop is featured after the rule verifier module for each model. In various examples, the human-in-the-loop is featured after the rule aggregation. In various examples, the human-in-the-loop is excluded.

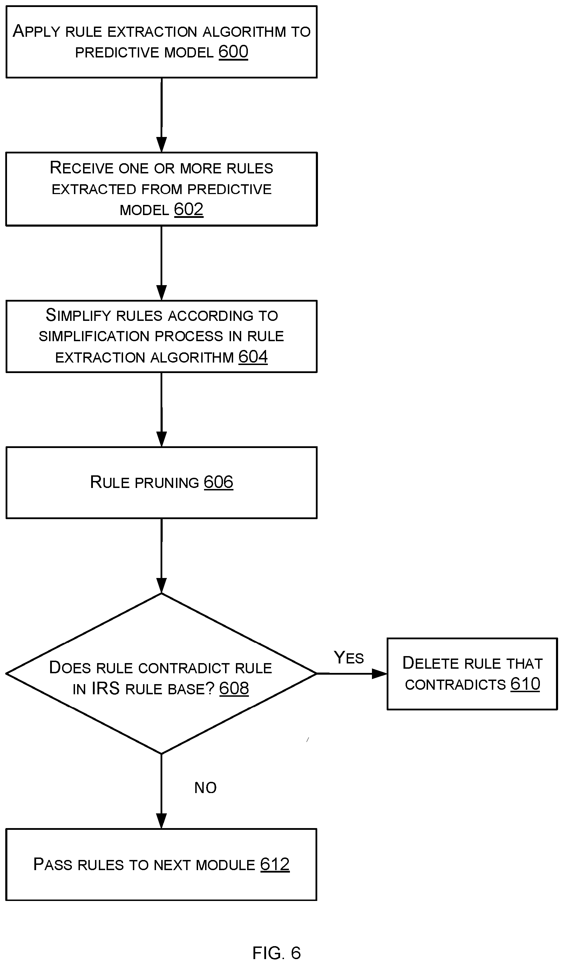

FIG. 6 is a flow diagram of the rule extractor module, according to one embodiment. In various examples, the rule extractor module includes rule simplification processes. In various examples, the rule extractor module includes rule pruning techniques. In various examples, there are a plurality of rule extractor modules.

In various examples, the rule extractor module applies the rule algorithm to the predictive model 600 and receives one or more rules extracted from the predictive model 602. In various examples, the rules are simplified according to a simplification process in the rule extraction algorithm 604. In various examples, applying the rule extraction algorithm further comprises simplifying the one or more rules according to a simplification process in the rule extraction algorithm used. In various examples, rule simplification refers to presenting rules in a uniform manner with similar conjunctions and format. In various examples, the use of parentheses, operators and rule feature names are represented in the same way in all generated rules (e.g., ^ is used in various examples of rules, rather than &) and representations cannot be used interchangeably.

In various examples, including the example of FIG. 6, rule pruning 606 is performed on the one or more rules extracted. In various examples, applying the rule extraction algorithm further comprises pruning the one or more rules to remove redundant rules. In various examples, pruning the one or more rules comprises verifying that each of the one or more rules does not contradict existing rules in the IRS rule base and deleting a rule if the rule is found to contradict an existing rule in the IRS rule base. Rule pruning techniques, such as I-Prune, PCBA based pruning, long rules pruning, compact rule set, Laplace accuracy, and so on, are used.

Rules that contradict an existing rule in the IRS rule base are deleted 610. Rules that do not contract an existing rule can be passed to the next module 612. In various example, the next module is a rule verifier module. In various examples, the next module is a human-in-the-loop module. In various examples, the next module is a rule aggregation module. In various examples, the rules are immediately stored in the IRS rule base by the rule extractor module. In various examples, applying a rule extraction algorithm to the predictive model further comprises updating an IRS rule base of the IRS to include the one or more rules.

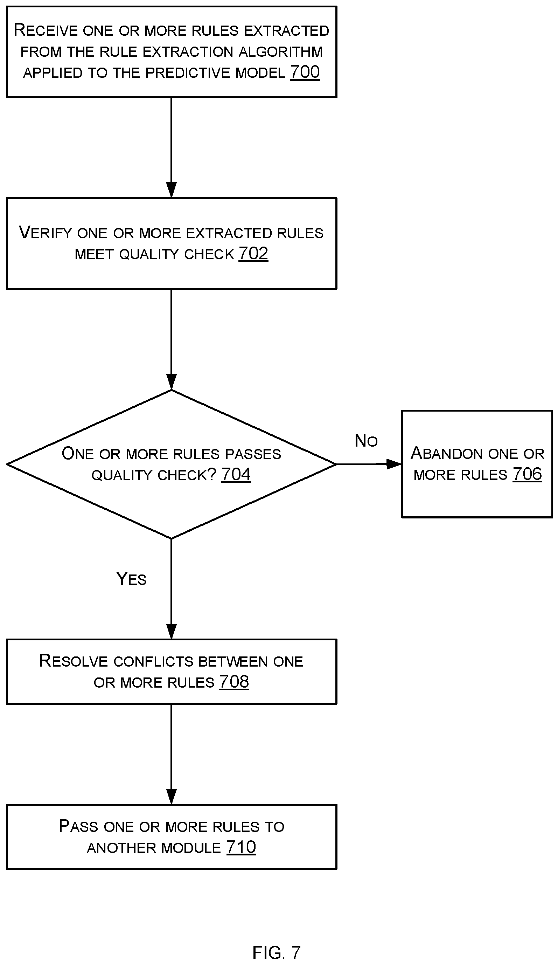

FIG. 7 is a flow diagram of the rule verifier module, according to one embodiment. In various examples, the rule verifier module is included in the IRS rule base expander.

The rule verifier module receives one or more rules from the rule extraction algorithm applied to the predictive model 700. In various examples, the predictive model comprises a plurality of sub-models and a different rule extraction algorithm is applied to each of the plurality of sub-models to extract one or more rules from each of the plurality of sub-models. In various examples, there are a plurality of rule verifier modules. In various examples, each of the plurality of rule verifier modules receives one or more rules from one of the plurality of predictive models.

The rule verifier module verifies the quality 702 of the one or more rules. In various examples, verifying the quality of each of the one or more rules comprises checking that each of the one or more rules are appropriate for the specified input.

The rule verifier module filters the rules, based upon whether the one or more rules passes the quality check 704. If the rule does not pass the quality check, and is not appropriate for the specified input, then the rule is abandoned 706. If the rule does pass the quality check, and is appropriate for the specified input, the rule is kept and used in the next step. When the rules are checked and they are appropriate for the specified input, they pass a quality check. When the one or more rules are checked and they are not appropriate for the specified input, they do not pass a quality check.

The rules that were not abandoned have their conflicts resolved 708. In various examples, applying the rule extraction algorithm further comprises using a rule verifier module to resolve conflicts between the rules. In various examples, resolving conflicts between the rules comprises merging the rules. In various examples, resolving conflicts between the rules comprises dropping outdated versions of the rules. In various examples, conflict resolution algorithms are used to resolve the conflicts between the rules. In various examples, the size ordering conflict resolution algorithm is used, which replaces the rules based on a rule needing more qualifying criteria to be met

The one or more rules are passed to another module 710 once the conflicts are resolved. In various examples, the module is the rule aggregation module. In various examples, the one or more rules are passed to the human-in-the-loop. In various examples, the rules are stored in the IRS rule base.

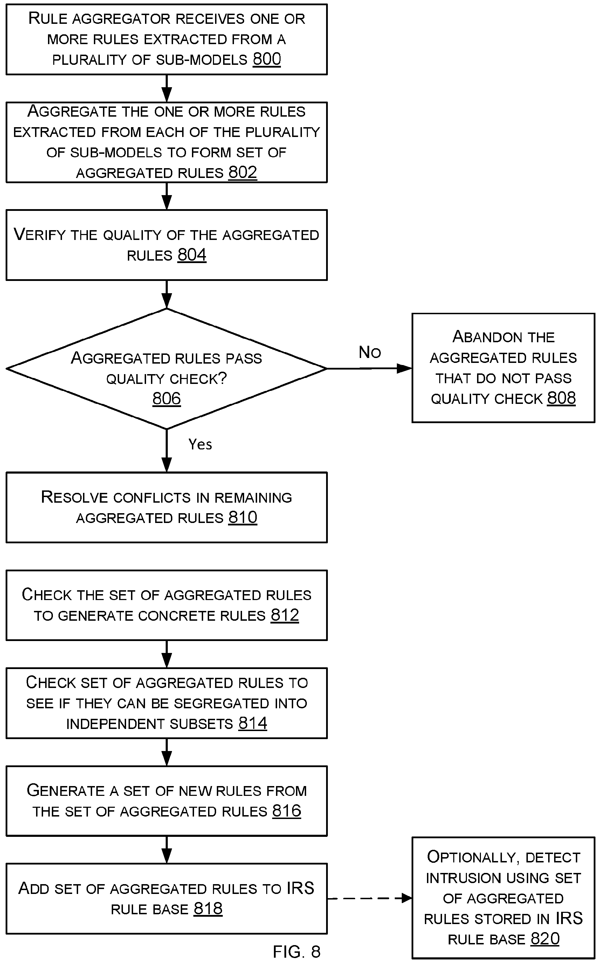

FIG. 8 is a flow diagram of the rule aggregation module, according to one embodiment. In various examples, the rule aggregation module is included in the IRS rule base expander.

The rule aggregation module receives one or more rules from a different module. In various examples, the different module is the rule extractor module. In various examples, the different module is the rule verifier module. In various examples, the different module is the human-in-the-loop module. In various examples, the rule aggregation receives one or more rules from the rule extraction algorithm applied to the predictive model. In various examples, the predictive model comprises a plurality of sub-models and a different rule extraction algorithm is applied to each of the plurality of sub-models to extract one or more rules from each of the plurality of sub-models. In various examples, the rule aggregation module receives one or more rules extracted from a plurality of sub-models 800.

The rule aggregation module aggregates the one or more rules extracted from each of the plurality of sub-models to form a set of aggregated rules 802. In various examples, using a rule aggregation module to aggregate the one or more rules extracted from each of the plurality of sub-models further comprises verifying the quality of the rules in the set of aggregated rules 804. In various examples, verifying the quality of the set of aggregated rules comprises checking that the set of aggregated rules are appropriate for the specified input.

The rule verifier module filters the rules 806, based upon whether the set of aggregated rules passes the quality check. If the rule does not pass the quality check, and is not appropriate for the specified input, then the rule is abandoned 808. If the rule does pass the quality check, and is appropriate for the specified input, the rule is kept and used in the next step. When the set of aggregated rules are checked and they are appropriate for the specified input, the set of aggregated rules pass a quality check. When the set of aggregated rules are checked and they are not appropriate for the specified input, the set of aggregated rules do not pass a quality check.

The rule aggregation module resolves conflicts 810 in the remaining aggregated rules. using a rule aggregation module to aggregate the one or more rules extracted from each of the plurality of sub-models further comprises resolving conflicts between the rules in the set of aggregated rules. In various examples, resolving conflicts between the rules comprises merging the rules. In various examples, resolving conflicts between the rules comprises dropping outdated versions of the rules. In various examples, conflict resolution algorithms are used to resolve the conflicts between the set of aggregated rules. In various examples, the size ordering conflict resolution algorithm is used, which replaces rules in the set of aggregated rules based on a rule needing more qualifying criteria to be met.

In various examples, including that described in FIG. 8, the rule aggregation module checks each of the rules in the set of aggregated rules to generate a concrete rule. In various examples, a concrete rule is generated by combining at least two of the rules in the set of aggregated rules.

Each of the rules in the set of aggregated rules are also checked to see if the rules can be segregated into independent subsets 814. In various examples, when the rules can be segregated, the rule aggregation segregates the rules into independent subsets. Independent subsets refer to a set of rule feature combinations for a new rule that are derivable from existing rules. Thus, new rules are also valid rules.

In the example of FIG. 8, a set of new rules are generated from the set of aggregated rules 816. In various examples, a set of new rules is generated from the set of aggregated rules, by considering permutations of a rule feature and a rule output and combining the rules differently as a result of the permutations, and the set of new rules is combined with the set of aggregated rules to enlarge the set of aggregated rules. In various examples, the rule aggregation module generates the set of new rules.

In the examples where the human-in-the-loop module is not positioned to receive the set of aggregated rules (e.g., after the rule aggregation), the rule aggregation module adds the set of aggregated rules to the IRS rule base 818. In various examples, the set of aggregated rules is added to the IRS rule base so that the IRS rule base is updated to include the set of aggregated rules. An intrusion is detected using the set of aggregated rules stored in the IRS rule base 820.

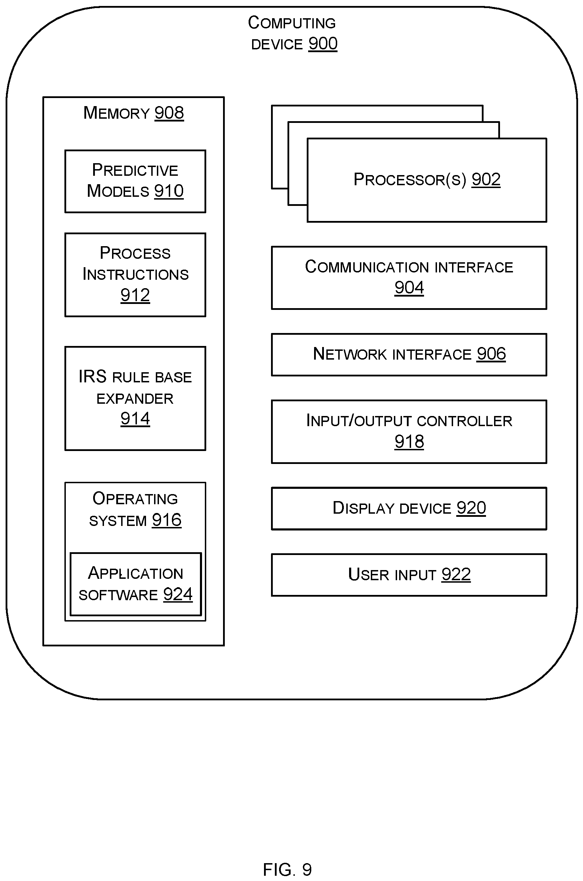

FIG. 9 illustrates various components of an example computing device 900 in which embodiments of the present invention are implemented in some examples. The computing device is of any suitable form such as a smart phone, a desktop computer, a tablet computer, a laptop computer.

The computing device 900 comprises one or more processors 902 which are microprocessors, controllers, or any other suitable type of processors for processing computer executable instructions to control the operation of the device in order to perform the methods of figures 1 to 8. In some examples, for example where a system on a chip architecture is used, the processors 902 include one or more fixed function blocks (also referred to as accelerators) which implement a part of the method of figures 1 to 8 in hardware (rather than software or firmware). That is, the methods described herein are implemented in any one or more of software, firmware, hardware. The computing device has an IRS rule base expander 914. Platform software comprising an operating system 916 or any other suitable platform software is provided at the computing-based device to enable application software 924 to be executed on the device. Although the computer storage media (memory 908) is shown within the computing-based device 900 it will be appreciated that the storage is, in some examples, distributed or located remotely and accessed via a network or other communication link (e.g., using communication interface 904).

The computing-based device 900 also comprises an input/output controller 918 arranged to output display information to a display device 920 which may be separate from or integral to the computing-based device 900. The display information may provide a graphical user interface. The input/output controller 918 is also arranged to receive and process input from one or more devices, such as a user input device 922 (e.g., a mouse, keyboard, camera, microphone, or other sensor). In some examples the user input device 922 detects voice input, user gestures or other user actions. In an embodiment the display device 920 also acts as the user input device 922 if it is a touch sensitive display device. The input/output controller 918 outputs data to devices other than the display device in some examples.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The term "set" refers to one or more items and does not include the empty set.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

## Claims

1. A computer-implemented method of determining rules for an intrusion response system, IRS, the method comprising:
receiving a predictive model configured to analyse potential threat data and recommend mitigating actions to potential threats; and
applying a rule extraction algorithm to the predictive model to extract one or more rules from the predictive model; and
updating an IRS rule base of the IRS to include the one or more rules.

2. The method of claim 1, wherein the method further comprises detecting a potential threat that matches at least one of the one or more rules and performing a mitigating action defined by the at least one of the one or more rules, subsequent to updating the IRS rule base.

3. The method of claim 1, wherein applying the rule extraction algorithm further comprises simplifying the one or more rules according to a simplification process in the rule extraction algorithm used.

4. The method of any preceding claim, wherein applying the rule extraction algorithm further comprises pruning the one or more rules to remove redundant rules, and wherein pruning the one or more rules comprises verifying that each of the one or more rules does not contradict existing rules in the IRS rule base and deleting a rule if the rule is found to contradict an existing rule in the IRS rule base.

5. The method of any preceding claim, wherein applying the rule extraction algorithm further comprises using a rule verifier module to verify the quality of each of the one or more rules, and wherein verifying the quality of each of the one or more rules comprises checking that each of the one or more rules is appropriate for the specified input.

6. The method of any preceding claim, wherein applying the rule extraction algorithm further comprises using a rule verifier module to resolve conflicts between the rules, and wherein resolving conflicts between the rules comprises one of merging the rules or dropping outdated versions of the rules.

7. The method of any preceding claim, wherein the predictive model is trained by a machine learning algorithm.

8. The method of any preceding claim, wherein the predictive model comprises a plurality of sub-models and a different rule extraction algorithm is applied to each of the plurality of sub-models to extract one or more rules from each of the plurality of sub-models.

9. The method of claim 8, wherein applying the rule extraction algorithm to each of the plurality of sub-models further comprises using a rule aggregation module to aggregate the one or more rules extracted from each of the plurality of sub-models into a set of aggregated rules.

10. The method of claim 9, wherein using a rule aggregation module to aggregate the one or more rules extracted from each of the plurality of sub-models further comprises verifying the quality of the rules in the set of aggregated rules and resolving conflicts between the rules in the set of aggregated rules.

11. The method of claim 9, wherein the rule aggregation module checks each of the rules in the set of aggregated rules to generate a concrete rule, wherein a concrete rule is generated by combining at least two of the rules in the set of aggregated rules.

12. The method of claim 9, wherein the rule aggregation module checks each of the rules in the set of aggregated rules to see if the rules can be segregated into independent subsets, and when the rules can be segregated, segregating the rules into independent subsets.

13. The method of claim 9, wherein a set of new rules is generated from the set of aggregated rules by the rule aggregation module, by considering permutations of a rule feature and a rule output and combining the rules differently as a result of the permutations, and the set of new rules is combined with the set of aggregated rules to enlarge the set of aggregated rules.

14. The method of any of claims 9 to 13, wherein the set of aggregated rules is added to the IRS rule base so that the IRS rule base is updated to include the set of aggregated rules.

15. An apparatus comprising: at least one processor; and a memory storing instructions that, when executed by the at least one processor, perform a method for determining rules for an intrusion response system, IRS, comprising:
receiving a predictive model configured to analyse potential threat data and recommend mitigating actions to potential threats; and
applying a rule extraction algorithm to the predictive model to extract one or more rules from the predictive model; and
updating an IRS rule base of the IRS to include the one or more rules.
